Europäisches Patentamt

European Patent Office

Office européen des brevets

(11) Veröffentlichungsnummer: **0 219 620 B1**

# EUROPÄISCHE PATENTSCHRIFT

(45) Veröffentlichungstag der Patentschrift: **25.03.92**

(21) Anmeldenummer: **86110213.5**

(22) Anmeldetag: **24.07.86**

(51) Int. Cl.⁵: **G02B 26/10**, G02B 26/08

(54) **Schnelle Scanneinrichtung für höchste Ablenkgeschwindigkeiten.**

(30) Priorität: **24.10.85 DE 3537843**

(43) Veröffentlichungstag der Anmeldung:
**29.04.87 Patentblatt 87/18**

(45) Bekanntmachung des Hinweises auf die
Patenterteilung:
**25.03.92 Patentblatt 92/13**

(84) Benannte Vertragsstaaten:
**CH FR IT LI SE**

(56) Entgegenhaltungen:
**EP-A- 0 120 329**
**FR-A- 2 339 179**
**US-A- 4 436 260**

(73) Patentinhaber: **Messerschmitt-Bölkow-Blohm**
**Gesellschaft mit beschränkter Haftung**
**Robert-Koch-Strasse**
**W-8012 Ottobrunn(DE)**

(72) Erfinder: **Diehl, Christian**
**Steinseestrasse 24**
**W-8000 München 80(DE)**
Erfinder: **Kirsche, Horst, Dipl.-Ing.**
**Im Gefilde 45**
**W-8000 München 83(DE)**

## Beschreibung

Die Erfindung betrifft eine schnelle Scaneinrichtung für höchste Ablenkgeschwindigkeiten, bei Laser-Leitstrahlsystemen.

Eine Scaneinrichtung ist eine optische Einrichtung, mit der man einen Lichtstrahl so ablenken kann, daß ein räumliches Muster entsteht, das mit einer bestimmten Wiederholfrequenz durchlaufen wird. Eine Scaneinrichtung wird in Laser-Leitstrahlsystemen verwendet, um durch zeitsynchronisierte Beleuchtung von verschiedenen Raumpunkten eine Raumzeitzuordnung zu gewinnen und damit den entsprechenden Raumpunkten Adressen zuweisen zu können. Dies ist Grundlage eines jeden abtastenden Laser-Leitstrahlprojektors.

Die bei einigen Waffensystemen benötigte Wiederholfrequenz eines Raummusters ist aus Gründen der Redundanz und aus Gründen der Schnelligkeit und Beweglichkeit sehr hoch. Man verwendet deswegen akusto-optische Deflektoren. Will man jedoch zweifarbig arbeiten, insbesondere dann, wenn die Farben im Spektralbereich sehr weit auseinanderliegen, oder will man sehr große Ablenkwinkel, so bekommt man mit akusto-optischen Deflektoren Schwierigkeiten. Man muß deswegen mit Spiegelsystem arbeiten. Spiegelsysteme sind aber für diese Verhältnisse extrem langsam. Die gewünschte Wiederholfrequenz des gesamten Scanmusters ist, um atmosphärische Szintillationen zu umgehen oder auch um die hohe Beweglichkeit und Schnelligkeit des Flugkörpers nicht einzuschränken, im Bereich von 10 kHz. Dies ist jedoch etwa um drei Größenordnungen schneller als man mit gewöhnlichen Scaneinrichtungen beherrscht.

Der vorliegenden Erfindung liegt die Aufgabe zugrunde, eine Scaneinrichtung der eingangs genannten Art zu schaffen, bei der Umdrehungsgeschwindigkeiten der Spiegel von $10^6$ Umdrehungen pro Minute möglich sind.

Diese Aufgabe wird durch die im Anspruch 1 aufgezeigten Maßnahmen gelöst. In den Unteransprüchen sind vorteilhafte Ausgestaltungen angegeben und in der Beschreibung ist ein Ausführungsbeispiel beschrieben, das in der Zeichnung dargestellt ist. Es zeigen:

Fig. 1 das Drehspiegelsystem in einer schematischen Seitenansicht als Kreiselsystem in sehr vergrößerter Darstellung;

Fig. 1a eine schematische Draufsicht auf die Bewegungslinien des Drehspiegelsystems gemäß Fig. 1;

Fig. 2 die Keilplatten des Drehspiegels in Explorationsdarstellung, in vergrößertem maßstab perspektivisch gezeichnet;

Fig. 3 in einer perspektivischen, vergrößerten Darstellung eine Draufsicht auf einen Drehspiegel in seiner Fassung.

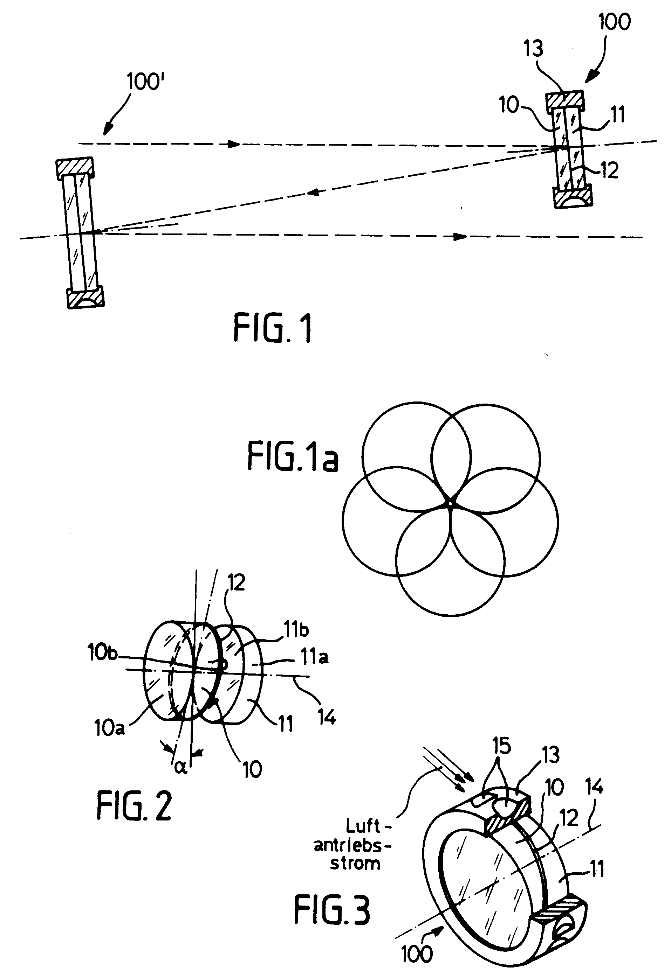

Wie aus den Figuren 1 bis 3 ersichtlich, setzt sich die Scaneinrichtung in dem gezeigten Ausführungsbeispiel aus speziell ausgebildeten Zylinderspiegeln 100, 100' zusammen, die als Zylinderkörper 10, 11 ausgebildet sind, die sich um ihre Hauptachse 14 drehen, wobei sie innerhalb der Fassung 13 auf Luftlagern ruhen und durch Luftströmung in Rotation versetzt werden. Der Luftstrom ist also sowohl Antrieb als auch Lagerung. Damit aber diese Zylinderkörper 10, 11 optisch überhaupt eine Wirkung haben, sind sie nicht an ihrer Oberfläche verspiegelt, sondern die Spiegelschicht 12 läuft "schräg" durch den Zylinderspiegel 100, 100' hindurch. Das heißt, der Zylinderspiegel ist aus zwei gleichen Zylinderkörpern 10, 11 zusammengesetzt, zwischen denen eine Spiegelschicht 12 angeordnet ist, die jedoch nicht senkrecht zur Rotationsachse steht, sondern in einem kleinen Winkel α, der je nach Erfordernis etc. zwischen 0,2° bis etwa 2° aus der Senkrechten abweicht. Dies wird dadurch erreicht, daß - wie auch deutlich aus der Fig. 2 entnehmbar ist - die mit der Spiegelschicht zu versehende Stirnfläche 10b, 11b um den gewünschten Winkelbetrag α aus der Parallelität zur Stirnfläche 10a, 11a abweicht, so daß "keilförmige Zylinderkörper" 10, 11 entstehen. Diese werden mit der Spiegelschicht so aneinandergefügt - vorzugsweise miteinander verklebt - daß ein "ebener" Zylinderspiegel 100 entsteht, die Achse 14 also nicht abgewinkelt wird. Der Zylinderspiegel 100, 100' ist also aus zwei vollkommen gleichen Teilen aufgebaut, die miteinander verklebt sind. Diese beiden Teile - als Zylinderkörper 10, 11 bezeichnet -sind oberflächenverspiegelt. Die Zylinderspiegel 100, 100' sind in ihren Abmaßen relativ sehr klein, im gezeigten Ausführungsbeispiel der Fig. 1 wird beispielsweise die Höhe zwischen 7mm und 5mm liegen.

Diese Zylinderkörper 10, 11 sind nun in einer Fassung 13 auf Luftlagern angeordnet und werden durch Luftanströmung in Rotation versetzt. Aufgrund der geringen Abmaße und des geringen Gewichts der Zylinderspiegel 100, 100' können diese außergewöhnlich hohe Winkelgeschwindigkeiten, die nahe der Materialzerreißgrenze liegen, aufnehmen. Im gezeigten Ausführungsbeispiel sind ca. 1 Million Umdrehungen pro Minute möglich. Zur Ausnützung des Luftstromes um optimale Umdrehungszahlen zu erreichen wird die Fassung mit Windangriffsflächen, Windschaufeln, Windgruben usw. - also mit Ausbildungen der bekannten Kreiseltechnik versehen.

Bei der Drehung des zusammengefügten Zylinderspiegels 100 "torkelt" also die in ihm eingeschlossene Spiegelfläche 12 und da, im vorliegenden Falle der Laserstrahl im nicht aufgeweiteten Zustand nur einen Durchmesser von weniger als 3mm besitzt, genügt es, wenn der Zylinderspiegel einen Durchmesser von 3mm hat. Ein so kleiner Zylinder läßt sich - wie bereits erwähnt - ohne weiteres auf Geschwindigkeiten von etwa 1 Million Umdrehungen pro Minute bringen. Die torkelnde Spiegelfläche 12, die jetzt nur aus ein paar Atomlagen besteht, ist nicht in der Lage, eine wesentliche Umwucht zu erzeugen. Der Laserstrahl wird damit auf einer kreisförmigen Bahn abgelenkt. Um nun zu einem Scanmuster zu kommen, muß mit einem zweiten Spiegel 100′ gearbeitet werden, der ebenfalls den Laserstrahl auf einer kreisförmigen Bahn ablenkt. Sind beide Spiegelfrequenzen nun nicht gleich groß, so kommt es zu einem räumlichen Muster, beispielsweise wie in Fig. 1a dargestellt. Der zweite Spiegel kann wesentlich langsamer laufen als der erste, muß aber einen größeren Durchmesser besitzen, falls nicht eine Konversionsoptik verwendet wird.

Für den Anwendungsfall bei einer Lenkgranate entsteht das in Fig. 1a gezeigte Beispiel eines spiralförmigen Abtastmusters. Die Spirale wird einmal von innen nach außen und dann von außen nach innen durchlaufen.

**Patentansprüche**

1. Scaneinrichtung für höchste Ablenkgeschwindigkeiten bei Laserleitstrahlsystem, dadurch **gekennzeichnet,** daß sie zwei gleiche, durchsichtige Zylinderkörper (10, 11) enthält, bei denen jeweils eine Stirnfläche (10b, 11b) einen kleinen Winkel α - zwischen 0,2° und 2° - mit der zur Zylinderachse senkrechten anderen Stirnfläche aufweist, daß diese Zylinderkörper (10, 11) mit den schräg liegenden Stirnflächen (10b, 11b) unter Zwischenschaltung einer Spiegelschicht (12) so miteinander verbunden sind, daß ein von einer Spiegelschicht schräg durchschnittener Zylinder spiegel (100) entsteht, und daß der Zylinderspiegel in einer luftgelagerten und luftgetriebenen Fassung (13) angeordnet ist.

2. Einrichtung nach Anspruch 1, dadurch **gekennzeichnet,** daß der Zylinderspiegel (100) in seiner Zentralachse (14) durch einen Luftstrom in Rotation versetzt und auf Drehgeschwindigkeiten nahe der Materialzerreißgrenze gebracht wird.

3. Einrichtung nach den Ansprüchen 1 oder 2, dadurch **gekennzeichnet,** daß die Fassung (13) mit Windangriffsflächen (15) oder entsprechenden Ausbildungen der Kreiseltechnik versehen ist.

4. Einrichtung nach Ansprüchen 1 bis 3, dadurch **gekennzeichnet,** daß jeweils zwei Zylinderspiegel (100) zu einem Drehspiegelsystem (Fig. 1) kombiniert sind, wobei einer der Zylinderspiegel (100) eine geringere Winkelgeschwindigkeit jedoch einen größeren Durchmesser als der andere Zylinderspiegel (100′) aufweist.

5. Einrichtung nach den Ansprüchen 1 bis 4, dadurch **gekennzeichnet,** daß die Zylinderspiegel in ihrer Höhe und ihrem Durchmesser im Größenbereich von 3mm bis 10mm liegen.

**Claims**

1. Scanning device for extreme deflection speeds of laser-guidance systems, characterised in that it comprises two identical transparent cylinder bodies (10, 11) each with a respective end surface (10b, 11b) having a small angle α of between 0.2° and 2° relative to the other end surface which is vertical to the cylinder axis, that these cylinder bodies (10, 11) with the oblique end surfaces (10b, 11b) are interconnected with a mirrored layer (12) switched thereinbetween in such a manner that a cylinder mirror (100) is formed, which is transversely cut through by a mirror layer and that the cylinder mirror is arranged in an air-mounted or air-driven socket (13).

2. Device according to claim 1, characterised in that the cylinder mirror (100) is rotated in its central axis (14) by an airstream and brought up to rotary speeds near the material-destruction limit.

3. Device according to claims 1 or 2, characterised in that the socket (13) is provided with wind-engagement surfaces (15) or respective arrangements of the gyrotechnics.

4. Device according to claims 1 to 3, characterised in that two respective cylinder mirrors (100) are combined into a rotary-mirror system (Fig. 1), whereby one of the cylinder mirrors (100) has a lower angular velocity but a larger diameter than the other cylinder mirror (100').

5. Device according to claims 1 to 4, characterised in that the cylinder mirrors are in height and diameter in the dimensional range between 3 mm and 10 mm.

**Revendications**

1. Dispositif de balayage pour vitesses de déviation très élevées dans des systèmes à rayon directeur laser caractérisé en ce qu'il comporte deux éléments cylindriques (10, 11) transparents identiques, dont une surface frontale (10b, 11b) présente chaque fois un angle a de faible valeur - entre 0,2° et 2° - par rapport à l'autre surface frontale perpendiculaire à l'axe du cylindre, en ce que lesdits éléments cylindriques (10, 11) sont reliés entre eux par leur surface frontale (10b, 11b) inclinée avec interposition d'une couche réfléchissante (12) de manière à obtenir un miroir cylindrique (100) coupé en biais par une couche réfléchissante, et en ce que le miroir cylindrique est disposé dans une monture (13) supportée et mue pneumatiquement.

2. Dispositif selon la revendication 1, caractérisé en ce que le miroir cylindrique (100) est mis en rotation autour de son axe central (14) par un jet d'air et est amené à une vitesse de rotation proche de la limite de rupture du matériau.

3. Dispositif selon la revendication 1 ou 2, caractérisé en ce que la monture (13) est munie de surfaces d'attaque pour le jet d'air (15) ou de forme adaptées appartenant à la technique gyroscopique.

4. Dispositif selon les revendications 1 à 3, caractérisé en ce que deux miroirs cylindriques (100) sont combinés chaque fois pour former un système de miroirs rotatifs (figure 1), l'un des miroirs cylindriques (100) présentant une vitesse angulaire plus faible, mais un diamètre plus important que l'autre miroir cylindrique (100').

5. Dispositif selon les revendications 1 à 4, caractérisé en ce que la hauteur et le diamètre des miroirs cylindriques se situent dans la plage de 3 mm à 10 mm.

FIG. 1

FIG.1a

FIG. 2

FIG.3

Luftantriebsstrom